# FASCICULE DE BREVET EUROPEEN

(11) **EP 4 097 344 B1**
(45) Date de publication et mention de la délivrance du brevet: **31.01.2024**
(21) Numéro de dépôt: 20841985.3
(22) Date de dépôt: 07.12.2020
(51) Int. Cl.: F02D 41/02, F02D 37/02, F02D 41/10, F02P 5/04, B60K 6/48

(54) **CONTRÔLE DU COUPLE MOTEUR À COMBUSTION D'UN VÉHICULE AUTOMOBILE LORS DE LA FERMETURE DE L'EMBRAYAGE**
STEUERUNG DES DREHMOMENTS EINES KRAFTFAHRZEUGVERBRENNUNGSMOTORS BEIM SCHLIESSEN DER KUPPLUNG
CONTROL OF THE TORQUE OF A MOTOR VEHICLE COMBUSTION ENGINE WHEN CLOSING THE CLUTCH

(30) Priorité: 27.01.2020 FR 2000745
(43) Date de publication de la demande: 07.12.2022
(73) Titulaire: Stellantis Auto SAS, 78300 Poissy (FR)
(72) Inventeur: ROCQ, Gaetan, 78125 LA BOISSIERE ECOLE (FR); MILHAU, Yohan, 78630 ORGEVAL (FR); BARDET, Arnaud, 78150 LE CHESNAY (FR); BASTIANI, Philippe, 78300 POISSY (FR); FREIRE SUAREZ, Violette, 78150 LE CHESNAY (FR); HABBANI, Ridouane, 92600 ASNIERES SUR SEINE (FR)
(86) Numéro de dépôt international: PCT/FR2020/052296
(87) Numéro de publication internationale: WO 2021/152224

(56) Documents cités:
- WO-A1-2018/182494
- FR-A1- 3 028 292
- FR-A1- 3 074 535
- JP-A- 2013 136 326

## Description

### Domaine technique

L'invention a trait au domaine des véhicules automobiles et plus particulièrement au domaine des groupes motopropulseurs de véhicules automobile, et de leur contrôle.

### Technique antérieure

Depuis un certain nombre d'années, il est courant de prévoir dans un groupe motopropulseur de véhicule automobile un embrayage à friction commandé ou motorisé. Un tel embrayage correspond à un embrayage friction classique, du type mono-disque, avec toutefois un actuateur à commande électrique. Cela signifie qu'un véhicule équipé d'un tel embrayage ne comporte plus de pédale d'embrayage, ce dernier étant alors commandé essentiellement par la demande en couple de la part du conducteur, cette demande étant exprimée par l'enfoncement de la pédale d'accélérateur. Le processus d'accostage de l'embrayage nécessite cependant un contrôle précis du couple du moteur à combustion de manière à assurer une mise en mouvement du véhicule qui soit d'une part assez rapide et d'autre part ne provoque aucun à-coup ou autre perturbation du type vibration, etc.

Le document de brevet publié FR 2 887 496 A1 divulgue un procédé de couplage et découplage d'un moteur à combustion dans un groupe motopropulseur du type hybride, c'est-à-dire avec une machine électrique servant sélectivement de moteur et de générateur. Cet enseignement prévoit de modifier le couple de consigne du moteur à combustion lors de la fermeture de l'embrayage en le corrigeant en tenant compte de la modification d'inertie en rotation qu'occasionne la fermeture en question. Ce procédé est intéressant pour le couplage et découplage d'un moteur à combustion lorsque le véhicule est en mouvement. Il n'apporte pas véritablement de solution à la fermeture d'un embrayage alors que le véhicule est à l'arrêt.

Le document de brevet publié FR 2 999 138 A1 divulgue un procédé de couplage et découplage d'un moteur à combustion dans un groupe motopropulseur du type hybride, similaire à celui du document précédent. Similairement, il n'apporte pas véritablement de solution à la fermeture d'un embrayage alors que le véhicule est à l'arrêt.

Le document de brevet publié FR 3 042 765 A1 divulgue un procédé de couplage et découplage d'un moteur de traction à un train roulant d'un véhicule alors qu'un autre train roulant est déjà entrainé par un autre moteur de traction. Cet enseignement n'apporte pas de solution à la fermeture d'un embrayage alors que le véhicule est à l'arrêt.

WO 2018/182494 A1, FR 3 028 292 A1 et FR 3 074 535 A1 divulguent d'autres procédés de couplage et découplage d'un moteur à combustion dans un groupe motopropulseur.

### Exposé de l'invention

L'invention a pour objectif de pallier au moins un des inconvénients de l'état de la technique susmentionné. Plus particulièrement, l'invention a pour objectif de procurer un contrôle de couple d'un moteur à combustion dans un groupe motopropulseur avec un embrayage piloté, qui, d'une part, assure un agrément optimal et, d'autre part, réduit la consommation de carburant par le moteur à combustion.

L'invention a pour objet un procédé de contrôle d'un groupe motopropulseur comprenant un moteur à combustion à allumage commandé, un embrayage à friction commandé et une boîte de vitesse couplée audit moteur à combustion via ledit embrayage, ledit procédé comprenant les actions suivantes : commande de fermeture progressive de l'embrayage ; et concomitamment, détermination d'une consigne de couple d'air d'admission du moteur à combustion et d'une consigne de couple d'avance à l'allumage du moteur à combustion ; remarquable en ce que la détermination de la consigne de couple d'air d'admission du moteur à combustion est dynamique durant la fermeture progressive de l'embrayage et correspond à au moins une demande de couple du moteur à combustion dépendant de la fermeture de l'embrayage, majorée de manière dynamique d'une valeur d'anticipation de variation de ladite demande de couple du moteur à combustion.

Par « dynamique » et « de manière dynamique », on entend que la détermination est itérative, c'est-à-dire prévoit plusieurs calculs sur un cycle de fermeture de l'embrayage.

Selon un mode avantageux de l'invention, la valeur d'anticipation de variation de l'au moins une demande de couple du moteur à combustion dépendant de la fermeture de l'embrayage est basée sur une variation de ladite au moins une demande de couple du moteur à combustion sur une durée donnée.

Selon un mode avantageux de l'invention, la durée donnée est comprise entre 200ms et 3s.

Selon un mode avantageux de l'invention, la durée donnée est fixe, ou variable et dépend d'au moins un paramètre de fonctionnement du groupe motopropulseur, comme la température du moteur à combustion et le régime dudit moteur à combustion.

Selon un mode avantageux de l'invention, la variation de l'au moins une demande du couple du moteur à combustion sur une durée donnée est obtenue par dérivation temporelle de ladite au moins une demande de couple du moteur à combustion et multiplication par ladite durée donnée.

Selon un mode avantageux de l'invention, l'au moins une demande de couple du moteur à combustion dépendant de la fermeture de l'embrayage comprend la consigne de couple d'avance à l'allumage du moteur à combustion et un couple transmis par l'embrayage, la consigne de couple d'air d'admission du moteur à combustion correspondant au maximum de ladite consigne de couple d'avance à l'allumage du moteur à combustion majorée de la valeur d'anticipation de variation correspondante, et du couple transmis par l'embrayage majoré de la valeur d'anticipation de variation correspondante.

Selon un mode avantageux de l'invention, la consigne de couple d'air d'admission du moteur à combustion est égale au couple transmis par l'embrayage majoré de la valeur d'anticipation de variation, durant au moins une deuxième moitié de la durée totale de la fermeture progressive de l'embrayage.

Selon un mode avantageux de l'invention, la consigne de couple d'air d'admission du moteur à combustion est égale à la consigne de couple d'avance à l'allumage du moteur à combustion majorée de la valeur d'anticipation de variation, sur une première portion de la durée totale de la fermeture progressive de l'embrayage.

Selon un mode avantageux de l'invention, la première portion correspond à un quart, ou moins, de la durée totale de la fermeture progressive de l'embrayage, et la consigne de couple d'air d'admission du moteur à combustion est égale au couple transmis par l'embrayage majoré de la valeur d'anticipation de variation durant le reste de ladite durée totale de la fermeture progressive de l'embrayage.

L'invention a également pour objet un véhicule automobile comprenant : un groupe motopropulseur avec un moteur à combustion à allumage commandé, un embrayage à friction commandé et une boîte de vitesse couplée audit moteur à combustion via ledit embrayage ; et une unité de contrôle du groupe motopropulseur ; remarquable en ce que l'unité de contrôle est configurée pour exécuter le procédé selon l'invention.

Les mesures de l'invention sont intéressantes en ce qu'elles permettent d'optimiser le couple de consigne d'air d'admission du moteur à combustion de manière dynamique au cours de la fermeture de l'embrayage, c'est-à-dire de réduire la réserver de couple à un minimum suffisant pour assurer les besoins imminents et potentiellement évolutifs durant toute le processus d'accoste ou fermeture de l'embrayage. Il en résulte un meilleur rendement du moteur à combustion et une plus grande précision et un meilleur contrôle du couple du moteur à combustion.

### Brève description des dessins

[Fig 1] est une vue représentation schématique d'un véhicule, plus particulièrement du groupe motopropulseur du véhicule ;
[Fig 2] représente graphiquement les évolutions de couple moteur et de couple à l'embrayage lors d'un accostage ou fermeture d'un embrayage piloté ;
[Fig 3] représente graphiquement les évolutions de couple moteur et de couple à l'embrayage lors d'un accostage ou fermeture d'un embrayage piloté, suivant l'invention.

### Description détaillée

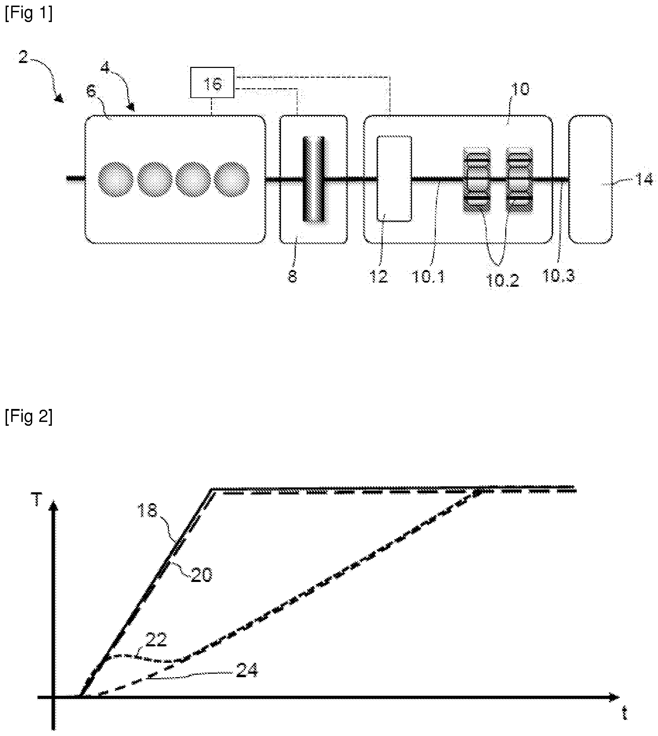

La figure 1 est une représentation schématique d'un véhicule automobile, plus particulièrement de son groupe motopropulseur.

Le véhicule 2 comprend un groupe motopropulseur 4 comprenant essentiellement un moteur à combustion 6, un embrayage à friction 8 et une boîte de vitesses 10.

Cette dernière comprend un arbre primaire 10.1 couplé au moteur à combustion 6 via l'embrayage 8. Une machine électrique 12 peut être intégrée dans la boîte de vitesses, en l'occurrence montée sur l'arbre primaire 10.1. La boîte de vitesses comprend également des engrenages 10.2 permettant de réaliser plusieurs rapports de transmission et un arbre de secondaire 10.3 relié cinématiquement aux roues 14 d'au moins un essieu du véhicule. Le moteur à combustion est du type à allumage commandé, comme notamment un moteur à essence. L'embrayage 8 est du type commandé électriquement.

Une unité de contrôle 16 est reliée électriquement au moteur à combustion 6, à l'embrayage 8 et à la boîte de vitesses 10.

La figure 2 illustre l'évolution du couple moteur et du couple à l'embrayage lors d'un accostage ou fermeture de l'embrayage sur le groupe motopropulseur de la figue 1, selon une approche peu favorable. L'axe horizontal exprime le temps *t*, par exemple en secondes, et l'axe vertical exprime le couple *T* par exemple en N.m. La figure 2 illustre le couple demandé par le conducteur, les consignes de couple d'air d'admission et d'avance à allumage du moteur à combustion et le couple transmis par l'embrayage.

Le couple demandé par le conducteur 18 présente une évolution correspondant essentiellement au degré d'enfoncement de la pédale d'accélérateur. Comme on peut le constater, le couple demandé par le conducteur présente une montée, en l'occurrence essentiellement rectiligne, suivie d'un plateau. Il est entendu que ce profil est un profil classique quelque peu idéalisé à des fins de clarté d'exposé, d'autres profils plus complexes étant possibles.

La consigne de couple du moteur à combustion comprend deux consignes de couple, à savoir une consigne de couple d'air d'admission du moteur à combustion 20 et une consigne de couple d'avance à l'allumage du moteur à combustion 22. La première de ces consignes contrôle la position du papillon d'admission d'air du moteur à combustion et ainsi la quantité d'air admise dans le moteur à combustion. Il s'agit d'une boucle de régulation dite lente car elle présente un temps de réponse qui peut être compris entre 200ms et 3s en fonction de différents paramètres de fonctionnement du moteur à combustion. Ce contrôle permet de faire varier de manière substantielle le couple effectivement délivré par le moteur, c'est-à-dire dans une large plage. La deuxième consigne de couple, à savoir la consigne de couple d'avance à l'allumage du moteur à combustion 22 contrôle l'avance à l'allumage. Cette consigne permet d'ajuster le couple délivré par le moteur à combustion pour une consigne de couple d'air d'admission donnée. Il s'agit d'une boucle de régulation dite rapide, avec un temps de réponse plus court que pour la boucle de régulation de l'admission d'air. En d'autres termes, pour une consigne de couple d'admission d'air donnée, cette consigne permet d'ajuster le couple effectif délivré par le moteur à combustion dans une plage plus limitée mais avec un temps de réponse plus court. Cette différence de temps de réponse s'explique par la nature même des contrôles opérés, à savoir que le papillon d'admission d'air est à une certaine distance des chambres de combustion du moteur à combustion et requiert un certain temps pour changer de position, de sorte qu'une commande de modification de la position angulaire du papillon en question n'a d'effet qu'après rotation du papillon et écoulement de la veine fluide entre le papillon et les chambres de combustion, alors qu'une modification de l'avance à l'allumage et/ou de la richesse du mélange aircarburant a un effet immédiat sur le cycle de combustion à partir duquel ladite modification est appliquée.

A la figure 2, on peut observer que la consigne de couple d'avance à l'allumage 22, correspondant au couple effectivement délivré par le moteur à combustion, présente une évolution correspondant essentiellement à celle du couple transmis par l'embrayage 24, à l'exception du début du processus de fermeture de l'embrayage, où la consigne de couple d'avance à l'allumage 22 est supérieure au couple transmis par l'embrayage 24. Ce surplus de couple permet au moteur d'accélérer à partir du régime de ralenti et ainsi de fonctionner à un régime d'avantage stable et performant durant le processus de fermeture de l'embrayage. On peut observer que la consigne de couple d'admission d'air 20, quant à elle, est sensiblement supérieure à la consigne de couple d'avance à l'allumage 22, afin de préserver au moteur à combustion une capacité d'augmentation rapide du couple par modification de la consigne de couple d'avance à l'allumage 22. En l'occurrence la consigne de couple d'admission d'air 20 suit l'évolution du couple demandé par le conducteur 18. Cela signifie, d'une part, que la réserve de couple du moteur à combustion est importante et, d'autre part, que la consigne de couple d'avance à l'allumage dégrade fortement le rendement du moteur à combustion. Cette dégradation est désavantageuse non seulement d'un point de vue consommation de carburant mais également d'un point de vue stabilité et précision du couple effectivement délivré par le moteur à combustion.

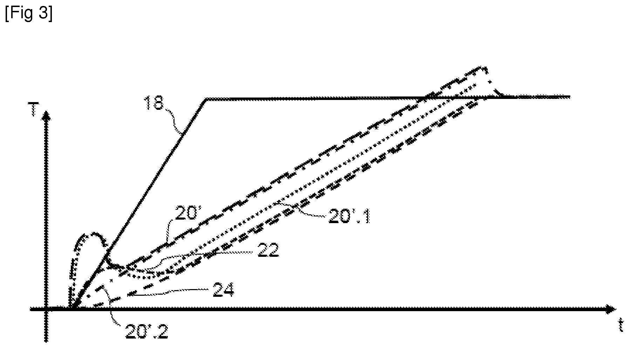

La figure 3, similaire à la figure 2, illustre l'évolution du couple moteur et du couple à l'embrayage lors d'un accostage ou fermeture de l'embrayage sur le groupe motopropulseur de la figue 1, selon une approche plus favorable qu'à la figure 2.

La demande de couple par le conducteur 18 est identique à la figure 2. Aussi la consigne de couple d'avance à l'allumage du moteur à combustion 22 et le couple transmis par l'embrayage 24 sont identiques à la figure 2. Par contre, la consigne de couple d'admission d'air du moteur à combustion 20' présente un profil sensiblement différent de la consigne correspondante 20 à la figure 2. La consigne de couple d'admission d'air du moteur à combustion 20' est en fait basée sur au moins une demande de couple du moteur à combustion dépendant de la fermeture de l'embrayage. Le processus de fermeture de l'embrayage implique en effet des besoins de couple du moteur à combustion qui peuvent varier sur la durée totale du processus. Le principe de détermination de la consigne de couple d'admission d'air du moteur à combustion 20' consiste à identifier les besoins en question et à observer leurs variations en vue de déterminer une valeur d'anticipation de variation et d'adapter le couple d'admission d'air du moteur à combustion 20' à ces besoins majorés. Parmi ces besoins, on peut compter le couple prélevé par l'embrayage et le couple de régulation du régime du moteur à combustion. Lors de la fermeture de l'embrayage, le couple délivré par le moteur à combustion est normalement supérieur ou égal au couple prélevé par l'embrayage, car sinon, le régime du moteur à combustion serait diminué. Aussi, au début du processus de fermeture de l'embrayage, le régime moteur doit augmenter en partant du régime de ralenti. A cet effet, le couple du moteur à combustion est supérieur au couple prélevé par l'embrayage.

La valeur d'anticipation est obtenue en observant l'évolution de l'au moins une demande de couple du moteur à combustion dépendant de la fermeture de l'embrayage, notamment en opérant une dérivée temporelle de ladite évolution et en calculant la valeur d'anticipation en multipliant ladite dérivée temporelle par une durée. Celle-ci correspond avantageusement à un temps de réponse maximum de la régulation du couple du moteur à combustion par l'avance à l'allumage. A titre d'exemple cette durée peut être de l'ordre de 500ms. Cette durée peut aussi être variable en fonction de différents paramètres de fonctionnement du moteur ayant un impact sur le temps de réponse, comme notamment la température du moteur à combustion et le régime moteur.

Plus particulièrement, la consigne de couple d'admission d'air du moteur à combustion 20' est basée sur l'anticipation de deux couples, à savoir le couple de régulation du régime moteur, correspondant à la consigne de couple d'avance à l'allumage du moteur à combustion 22 et le couple transmis par l'embrayage 24. Au début du processus de fermeture de l'embrayage, ces deux couples sont différents alors qu'après ils sont identiques ou du moins très proches l'un de l'autre. En référence à la description ci-avant de la figure 2, la consigne de couple d'avance à l'allumage du moteur à combustion 22 est supérieure au couple transmis par l'embrayage 24 de manière à permettre une montée en régime du moteur à combustion à partir du ralenti, de manière à permettre au moteur à combustion de fonctionner à des régimes lui permettant de délivrer le couple nécessaire à la mise en mouvement du véhicule, avec un rendement acceptable et sans vibrations.

Le couple anticipé de régulation du régime moteur 20'.1 est illustré à la figure 3. Il correspond au couple de régulation du régime moteur exprimé par la consigne de couple d'avance à l'allumage du moteur à combustion 22 majoré de la dérivée temporelle de ladite consigne, multipliée par une durée, par exemple fixe. On peut effectivement observer que le couple anticipé de régulation du régime moteur 20'.1 présente un écart par rapport à la consigne de couple d'avance à l'allumage du moteur à combustion 22 qui est proportionnel à la pente de ladite consigne. Cet écart augmente fortement au début du processus de fermeture de l'embrayage pour ensuite s'annuler lorsque la pente est nulle, et ensuite s'inverser, c'est-à-dire devenir négatif, lorsque la pente devient négative. Cet écart redevient ensuite positif après la deuxième inversion de la pente du la consigne de couple d'avance à l'allumage du moteur à combustion 22.

Le couple anticipé transmis par l'embrayage 20'.2 est illustré à la figure 3. Il présente un écart par rapport au couple transmis par l'embrayage 24 qui augmente progressivement avec la pente dudit couple pour ensuite se stabiliser lorsque la pente dudit couple reste constante.

Avantageusement, la consigne de couple d'admission d'air du moteur à combustion 20' est égale au maximum du couple anticipé de régulation du régime moteur 20'.1 et du couple anticipé transmis par l'embrayage 20'.2. A cet effet, on peut constater à la figure 3 que la consigne de couple d'admission d'air du moteur à combustion 20' correspond, au début du processus de fermeture de l'embrayage, au couple anticipé de régulation du régime moteur 20'.1 et ensuite au couple anticipé transmis par l'embrayage 20'.2. Le passage d'une courbe à l'autre se fait essentiellement au croisement de ces deux courbes, de manière à rester sur celle qui est supérieure à l'autre.

On peut constater en comparant la consigne de couple d'admission d'air du moteur à combustion 20' de la figure 3 avec la consigne de couple d'admission d'air du moteur à combustion 20 de la figure 2 qu'une réduction substantielle de l'écart en la consigne de couple d'admission d'air du moteur à combustion 20' et la consigne de couple d'avance à l'allumage du moteur à combustion 22 est atteinte, conduisant à une augmentation substantielle du rendement du moteur à combustion et de la précision et stabilité du couple délivré par le moteur à combustion, tout en conservant une réserve suffisante de couple au moteur à combustion pour assurer une adaptation rapide du couple délivré par le moteur à combustion par une variation de la consigne de couple d'avance à l'allumage du moteur à combustion 22.

L'approche décrite ci-avant est robuste car elle est basée sur le maximum de deux couples anticipés différents, à savoir le couple anticipé de régulation du régime moteur 20'.1 et le couple anticipé transmis par l'embrayage 20'.2. Ces deux couples anticipés peuvent en effet varier indépendamment l'un de l'autre.

## Revendications

1. Procédé de contrôle d'un groupe motopropulseur (4) comprenant un moteur à combustion (6) à allumage commandé, un embrayage (8) à friction et commandé, et une boîte de vitesses (10) couplée audit moteur à combustion (6) via ledit embrayage (8), ledit procédé comprenant les actions suivantes :
- commande de fermeture progressive de l'embrayage (8) ; et concomitamment
- détermination d'une consigne de couple d'air d'admission du moteur à combustion (20') et d'une consigne de couple d'avance à l'allumage du moteur à combustion (22) ;
**caractérisé en ce que**
la détermination de la consigne de couple d'air d'admission du moteur à combustion (20') est dynamique durant la fermeture progressive de l'embrayage (8) et correspond à au moins une demande de couple du moteur à combustion (22, 24) dépendant de la fermeture de l'embrayage (8), majorée (20'.1, 20'.2) de manière dynamique d'une valeur d'anticipation de variation de ladite demande de couple du moteur à combustion (22, 24).

2. Procédé selon la revendication 1, **caractérisé en ce que** la valeur d'anticipation de variation de l'au moins une demande de couple du moteur à combustion (22, 24) dépendant de la fermeture de l'embrayage (8) est basée sur une variation de ladite au moins une demande de couple du moteur à combustion (22, 24) sur une durée donnée.

3. Procédé selon la revendication 2, **caractérisé en ce que** la durée donnée est comprise entre 200ms et 3s.

4. Procédé selon l'une des revendications 2 et 3, **caractérisé en ce que** la durée donnée est fixe, ou variable et dépend d'au moins un paramètre de fonctionnement du groupe motopropulseur (4), comme la température du moteur à combustion (6) et le régime dudit moteur à combustion (6).

5. Procédé selon l'une des revendications 2 à 4, **caractérisé en ce que** la variation de l'au moins une demande du couple du moteur à combustion (22, 24) sur une durée donnée est obtenue par dérivation temporelle de ladite au moins une demande de couple du moteur à combustion (22, 24) et multiplication par ladite durée donnée.

6. Procédé selon l'une des revendications 1 à 5, **caractérisé en ce que** l'au moins une demande de couple du moteur à combustion (22, 24) dépendant de la fermeture de l'embrayage comprend la consigne de couple d'avance à l'allumage du moteur à combustion (22) et un couple transmis par l'embrayage (24), la consigne de couple d'air d'admission du moteur à combustion (20') correspondant au maximum de ladite consigne de couple d'avance à l'allumage du moteur à combustion (22) majorée de la valeur d'anticipation de variation (20'.1) correspondante, et du couple transmis par l'embrayage (24) majoré de la valeur d'anticipation de variation (20'.2) correspondante.

7. Procédé selon la revendication 6, **caractérisé en ce que** la consigne de couple d'air d'admission du moteur à combustion (20') est égale au couple transmis par l'embrayage (24) majoré de la valeur d'anticipation de variation (20'.2), durant au moins une deuxième moitié de la durée totale de la fermeture progressive de l'embrayage (8).

8. Procédé selon l'une des revendications 6 et 7, **caractérisé en ce que** la consigne de couple d'air d'admission du moteur à combustion (20') est égale à la consigne de couple d'avance à l'allumage du moteur à combustion (22) majorée de la valeur d'anticipation de variation (20'.1), sur une première portion de la durée totale de la fermeture progressive de l'embrayage (8).

9. Procédé selon la revendication 8, **caractérisé en ce que** la première portion correspond à un quart, ou moins, de la durée totale de la fermeture progressive de l'embrayage (8), et la consigne de couple d'air d'admission du moteur à combustion (20') est égale au couple transmis par l'embrayage (24) majoré de la valeur d'anticipation de variation (20'.2) durant le reste de ladite durée totale de la fermeture progressive de l'embrayage (8).

10. Véhicule automobile (2) comprenant :
- un groupe motopropulseur (4) avec un moteur à combustion à allumage commandé (6), un embrayage (8) à friction et commandé, et une boîte de vitesses (10) couplée audit moteur à combustion (6) via ledit embrayage (8) ; et
- une unité de contrôle (16) du groupe motopropulseur (4) ;
**caractérisé en ce que** l'unité de contrôle (16) est configurée pour exécuter le procédé selon l'une des revendications 1 à 9.

## Patentansprüche

1. Verfahren zur Steuerung eines Antriebsstrangs (4), der einen Verbrennungsmotor (6) mit Fremdzündung, eine reibungsgesteuerte Kupplung (8) und ein über die Kupplung (8) mit dem Verbrennungsmotor (6) gekoppeltes Getriebe (10) umfasst Verfahren, das die folgenden Aktionen umfasst:
- Steuerung des progressiven Schließens der Kupplung (8); und gleichzeitig - Bestimmung eines Ansaugluftdrehmomentsollwerts des Verbrennungsmotors (20') und eines Zündvorlaufdrehmomentsollwerts des Verbrennungsmotors (22); **dadurch gekennzeichnet, dass** die Bestimmung des Ansaugluftdrehmomentsollwerts des Verbrennungsmotors (20') während des fortschreitenden Schließens der Kupplung (8) dynamisch ist und mindestens einer vom Schließen der Kupplung (8) abhängigen Drehmomentanforderung des Verbrennungsmotors (22, 24) entspricht, erhöht (20'.1, 20'. 2) dynamisch durch einen Erwartungswert der Variation des Drehmomentbedarfs des Verbrennungsmotors (22, 24).

2. Verfahren nach Anspruch 1, **dadurch gekennzeichnet, dass** der Erwartungswert der Variation der mindestens einen Drehmomentanforderung des Verbrennungsmotors (22, 24) in Abhängigkeit vom Schließen der Kupplung (8) auf einer Variation dieser mindestens einen basiert Drehmomentbedarf des Verbrennungsmotors (22, 24) über eine vorgegebene Dauer.

3. Verfahren nach Anspruch 2, **dadurch gekennzeichnet, dass** die vorgegebene Dauer zwischen 200 ms und 3 s liegt.

4. Verfahren nach einem der Ansprüche 2 und 3, **dadurch gekennzeichnet, dass** die vorgegebene Dauer fest oder variabel ist und von mindestens einem Betriebsparameter des Antriebsstrangs (4), wie der Temperatur des Verbrennungsmotors (6) und der Drehzahl, abhängt des Verbrennungsmotors (6).

5. Verfahren nach einem der Ansprüche 2 bis 4, **dadurch gekennzeichnet, dass** die Variation des mindestens einen Drehmomentbedarfs des Verbrennungsmotors (22, 24) über eine gegebene Dauer durch zeitliche Ableitung des mindestens einen Drehmomentbedarfs des Verbrennungsmotors (22, 24) erhalten wird Verbrennungsmotor (22, 24) und Multiplikation mit der vorgegebenen Dauer.

6. Verfahren nach einem der Ansprüche 1 bis 5, **dadurch gekennzeichnet, dass** die mindestens eine Drehmomentanforderung des Verbrennungsmotors (22, 24) in Abhängigkeit vom Schließen der Kupplung den Vordrehmomentsollwert bei Zündung des Verbrennungsmotors (22) umfasst. und ein von der Kupplung (24) übertragenes Drehmoment, wobei der AnsaugluftDrehmomentsollwert des Verbrennungsmotors (20') dem Maximum des Vorlaufdrehmomentsollwerts bei Zündung des Verbrennungsmotors (22) entspricht, erhöht um den entsprechenden Variationserwartungswert ( 20'.1) und das von der Kupplung (24) übertragene Drehmoment um den entsprechenden Variationsvorwegwert (20'.2) erhöht.

7. Verfahren nach Anspruch 6, **dadurch gekennzeichnet, dass** der Ansaugluftdrehmoment-Sollwert des Verbrennungsmotors (20') mindestens gleich dem von der Kupplung (24) übertragenen Drehmoment erhöht um den Variationsvorwegwert (20'.2) ist eine zweite Hälfte der Gesamtdauer des fortschreitenden Schließens der Kupplung (8).

8. Verfahren nach einem der Ansprüche 6 und 7, **dadurch gekennzeichnet, dass** der Ansaugluftdrehmomentsollwert des Verbrennungsmotors (20') gleich dem Zündvordrehmomentsollwert des Verbrennungsmotors ist. Verbrennung (22) erhöht um den Variationserwartungswert ( 20'.1), über einen ersten Teil der Gesamtdauer des progressiven Schließens der Kupplung (8).

9. Verfahren nach Anspruch 8, **dadurch gekennzeichnet, dass** der erste Abschnitt einem Viertel oder weniger der Gesamtdauer des progressiven Schließens der Kupplung (8) entspricht und der Ansaugluftdrehmomentsollwert der Motorverbrennung (20') ist gleich dem von der Kupplung (24) übertragenen Drehmoment, erhöht um den Änderungserwartungswert (20'.2), während der verbleibenden Gesamtdauer des fortschreitenden Schließens der Kupplung (8).

10. Kraftfahrzeug (2), umfassend:
- einen Antriebsstrang (4) mit einem Verbrennungsmotor (6) mit Fremdzündung, einer reibungsgesteuerten Kupplung (8) und einem Getriebe (10), das über die Kupplung mit dem Verbrennungsmotor (6) gekoppelt ist (8); und- eine Steuereinheit (16) des Antriebsstrangs (4); **dadurch**
**gekennzeichnet, dass** die Steuereinheit (16) zur Ausführung des Verfahrens nach einem der Ansprüche 1 bis 9 konfiguriert ist.

## Claims

1. Method for controlling a powertrain (4) comprising a spark-ignition combustion engine (6), a friction-controlled clutch (8), and a gearbox (10) coupled to said combustion engine (6) via said clutch (8), said method comprising the following actions:
- control of progressive closing of the clutch (8); and concomitantlydetermination of an intake air torque setpoint of the combustion engine (20') and an ignition advance torque setpoint of the combustion engine (22); **characterized in that** determination of the intake air torque setpoint of the combustion engine (20') is dynamic during the progressive closing of the clutch (8) and corresponds to at least one torque request from the combustion engine (22, 24 ) dependent on the closing of the clutch (8), increased (20'.1, 20'.2) dynamically by an anticipation value of variation of said torque demand of the combustion engine (22, 24 ).

2. Method according to claim 1, **characterized in that** the anticipation value of variation of the at least one torque request of the combustion engine (22, 24) depending on the closing of the clutch (8) is based on a variation of said at least one torque demand of the combustion engine (22, 24) over a given duration.

3. Method according to claim 2, **characterized in that** the given duration is between 200ms and 3s.

4. Method according to one of claims 2 and 3, **characterized in that** the given duration is fixed, or variable and depends on at least one operating parameter of the powertrain (4), such as the temperature of the combustion engine (6) and the speed of said combustion engine (6).

5. Method according to one of claims 2 to 4, **characterized in that** the variation of the at least one torque demand of the combustion engine (22, 24) over a given duration is obtained by temporal derivation of said at least one demand of torque of the combustion engine (22, 24) and multiplication by said given duration.

6. Method according to one of claims 1 to 5, **characterized in that** the at least one torque request from the combustion engine (22, 24) depending on the closing of the clutch comprises the advance torque setpoint at I ignition of the combustion engine (22) and a torque transmitted by the clutch (24), the intake air torque setpoint of the combustion engine (20') corresponding to the maximum of said advance torque setpoint upon ignition of the combustion engine (22) increased by the corresponding variation anticipation value (20'.1), and the torque transmitted by the clutch (24) increased by the variation anticipation value (20 '.2) corresponding.

7. Method according to claim 6, **characterized in that** the intake air torque setpoint of the combustion engine (20') is equal to the torque transmitted by the clutch (24) increased by the variation anticipation value ( 20'.2), lasting at least a second half of the total duration of the progressive closing of the clutch (8).

8. Method according to one of claims 6 and 7, **characterized in that** the intake air torque setpoint of the combustion engine (20') is equal to the ignition advance torque setpoint of the combustion engine, combustion (22) increased by the variation anticipation value (20'.1), over a first portion of the total duration of the progressive closing of the clutch (8).

9. Method according to claim 8, **characterized in that** the first portion corresponds to a quarter, or less, of the total duration of the progressive closing of the clutch (8), and the intake air torque setpoint of the engine combustion (20') is equal to the torque transmitted by the clutch (24) increased by the variation anticipation value (20'.2) during the remainder of said total duration of the progressive closing of the clutch (8).

10. Motor vehicle (2) comprising:
- a powertrain (4) with a spark-ignition combustion engine (6), a friction-controlled clutch (8), and a gearbox (10) coupled to said combustion engine (6) via said clutch (8); and- a control unit (16) of the powertrain (4);
**characterized in that** the control unit (16) is configured to execute the method according to one of claims 1 to 9.
